## Europäisches Patentamt
## European Patent Office
## Office européen des brevets

(19)

(11) Numéro de publication: **0 200 656**
**A1**

# (12) DEMANDE DE BREVET EUROPEEN

(21) Numéro de dépôt: **86400964.2**

(22) Date de dépôt: **02.05.86**

(51) Int. Cl.⁴: **H 02 J 9/06**
**H 02 M 7/538**

(30) Priorité: **03.05.85 FR 8506801**

(43) Date de publication de la demande:
**05.11.86 Bulletin 86/45**

(84) Etats contractants désignés:
**AT BE CH DE FR GB LI LU NL**

(71) Demandeur: **SOCIETE GENERALE DE TRAVAUX ELECTRIQUES**
**44, boulevard de Champigny**
**F-94210 La Varenne Saint Hilaire(FR)**

(72) Inventeur:
**L'inventeur a renonce a sa designation**

(74) Mandataire: **Derambure, Christian**
**BUGNION ASSOCIES 116, Boulevard Haussmann**
**F-75008 Paris(FR)**

(54) **Perfectionnement aux alimentations en courant alternatif non susceptibles d'être interrompues de puissance inférieure ou égale à 1500 VA.**

(57) L'invention concerne une alimentation en courant alternatif non susceptible d'être interrompue comportant un seul et même circuit chargeur/onduleur (6) fonctionnant en chargeur lorsque l'alimentation est à l'état normal connectée au réseau (1), et un onduleur lorsque l'alimentation est à l'état de secours et que le réseau est défaillant, constitué essentiellement d'un circuit hâcheur à fonctionnement réversible PUSCH-PULL, à modulation de largeur d'amplitude à découpage à haute fréquence, notamment de l'ordre de 25 kHz.

Une telle alimentation est peu volumineuse et de faible coût.

Application à la mini ou micro-informatique, dispositifs de sécurité, équipements médicaux, laboratoires, automation, etc...

EP 0 200 656 A1

./...

FIG. 1

## PERFECTIONNEMENT AUX ALIMENTATIONS EN COURANT ALTERNATIF NON SUSCEPTIBLES D'ETRE INTERROMPUES DE PUISSANCE INFERIEURE OU EGALE A 1500 VA

La présente invention concerne une alimentation en courant alternatif non susceptible d'être interrompue, qui puisse fournir une puissance électrique crête en régime permanent inférieure ou égale à 1500 VA, notamment de l'ordre de 750 VA.

On connait déjà de nombreux types d'alimentation non susceptibles d'être interrompues. Les technologie mis en oeuvre jusqu'à lors dépendent pour beaucoup de la puissance nécessaire à la charge alimentée. En effet, le prix de vente d'une telle alimentation est directement proportionnel à la puissance qu'elle peut fournir. Par conséquent, pour les fortes puissances, il est possible de mettre en oeuvre des technologies plus complexes et plus onéreuses que pour des puissances de moindre importance.

La demande internationale 85 01842 décrit une alimentation non susceptible d'être interrompue fournissant une puissance d'ordre de 3 KVA. Une telle alimentation comporte d'une part une batterie d'accumulateurs connectée à un pont de quatre transistors de commutation qui constitue un circuit hâcheur à modulation de largeur d'amplitude. Les sorties de ce pont de transistor sont connectées à un enroulement primaire d'un transformateur. Le secteur normal est connecté à un deuxième en roulement primaire de ce transformateur alors que la charge est connectée à un enroulement secondaire de ce transformateur. Ainsi, le pont de transistor fonctionne en circuit chargeur de la batterie lorsque le secteur est correct, et fonctionne en circuit onduleur lorsque le secteur est défaillant, en fournissant un courant alternatif à partir de l'énergie de la batterie. Un tel circuit hâcheur chargeur onduleur est d'un prix de revient trop élevé pour des puissances du domaine de l'alimentation selon l'invention. En effet, un tel pont de transistor requiert un circuit de commande de modulation de largeur d'impulsions extrêmement compliqué et un trop grand nombre de composants électroniques coûteux. D'ailleurs, l'alimentation décrite dans ce document comporte un microprocesseur qui en assure la régulation, qui, en particulier commande un circuit de contrôle de la modulation de largeur d'impulsions. De tels dispositifs sont totalement exclus pour des fréquences inférieures ou égales à 1500 VA et notamment de l'ordre de 750 VA.

On connait également, en particulier de la demande internationale 80 02478, des alimentations de secours comportant une batterie qui fournit un courant alternatif à une charge via un onduleur lorsque la source normale d'alimentation alternative est interrompue. Une telle alimentation de secours n'a absolument pas les mêmes fonctions qu'une alimentation non susceptible d'être interrompue dans la mesure ou elle ne pallie pas aux légères défaillances de la source normale de courant, comme cela est explicité à la page 2 lignes 2 à 22 de cette demande internationale 80 02478. L'alimentation de secours décrite dans ce document comporte néanmoins un circuit onduleur constitué d'un hâcheur à modulation de largeur d'impulsions comprenant deux transistors montés en mode PUSCH-PULL. On utilise également ce même circuit pour charger la batterie, en synchronisant les signaux de modulation de largeur d'amplitude sur le secteur de façon que le circuit joue le rôle d'un pont de redressement statique. Cependant, ce circuit chargeur ne donne pas entièrement satisfaction dans la mesure ou la tension délivrée aux bornes de la batterie n'est pas parfaitement continue. De plus, si ce circuit hâcheur PUSCH-PULL extrêmement simple est suffisant pour des alimentations de secours, il n'est pas absolument pas utilisable dans une alimentation non susceptible d'être interrompue pour laquelle le passage du mode onduleur en mode chargeur doit être instantané et parfaitement synchronisé.

La demande de brevet français 2 544 924 décrit une alimentation non susceptible d'être interrompue comportant un circuit redresseur de la source électrique alternative normal d'énergie, une batterie d'accumulateurs constituant une source d'énergie électrique de secours, un circuit onduleur transformant le courant continu issu soit du redresseur précité, soit de la batterie d'accumulateur, en courant alternatif stabilisé et ininterrompu utilisé par la charge. Dans ce document, on précise que l'onduleur est connecté à la sortie d'un régulateur et fonctionne en tension continue élevée. Pour obtenir des performances importantes de cette alimentation, on utilise largement la technique de la modulation de largeur d'impulsions à découpage à haute fréquence. Cette alimentation de l'état de la technique reste cependant extrêmement onéreuse vu le nombre important de composants électroniques de haute qualité qu'elle met en oeuvre. De plus, le circuit onduleur fonctionne en permanence, et son rendement n'est pas tout à fait satisfaisant.

La présente invention vise à remédier à ces inconvénients et a pour objet une alimentation d'une charge en courant alternatif non susceptible d'être interrompue, dans la gamme de puissance inférieure ou égale à 1500 VA, notamment de l'ordre de 750 VA, dont le poids et le volume sont plus réduits que ceux des alimentations de l'art antérieur, dont le prix de revient est aussi faible que possible, et qui assure une continuité parfaite de l'alimentation sur la charge. L'invention vise également à procurer une telle alimentation dans laquelle le circuit chargeur de la batterie est de meilleure qualité que dans les alimentations de l'état de la technique non susceptibles d'être interrompues et de puissance équivalente.

Pour ce faire, l'invention propose une alimentation d'une charge en courant alternatif non susceptible d'être interrompue dont la puissance est inférieure ou égale à 1500 VA, notamment de l'ordre de 750 VA, comportant une batterie d'accumulateurs servant de source d'énergie de secours suppléant aux défaillances d'une source électrique alternative normale, un circuit chargeur/onduleur fonctionnant en chargeur lorsque l'alimentation est à l'état normal et en onduleur lorsque l'alimentation est à l'état de secours et que la source électrique alternative normale est défaillante, un transformateur de puissance comportant en enroulement secondaire connecté électriquement à la charge et au moins deux enroulements primaires l'un étant connecté à la source électrique alternative normale via un dispositif de commutation, et l'autre étant connecté au circuit chargeur/onduleur caractérisée en ce que le circuit chargeur/onduleur est constitué d'un circuit hâcheur PUSCH-PULL par modulation de largeur d'impulsions à découpage à haute fréquence, notamment de l'ordre de 25 Khz, réversible, qui comporte deux transistors de puissance identiques connectés respectivement à chacune des extrémités de l'enroulement primaire via deux inductances montées en série entre les transistors et cet enroulement, ces deux inductances étant couplées magnétiquement entre elles de sorte que, en fonctionnement du circuit hâcheur en chargeur l'une récupère par induction l'énergie électrique redressée qui passe dans l'autre lorsque le transistor connecté à cette autre inductance est en conduction, la batterie étant alimentée par cette première inductance en courant de charge parfaitement redressé.

Selon une autre caractéristique de l'invention, la borne positive de la batterie est connectée au point milieu de l'enroulement primaire du transformateur auxquel les inductances sont connectées, la borne négative de la batterie étant reliée à deux diodes de récupération connectées par ailleurs respectivement au point de jonction des inductances et des transistors, ces diodes étant passantes entre la borne négative de la batterie et ce point de jonction, les deux transistors étant par ailleurs connectés directement en mode PUSCH-PULL entre eux et à la borne négative de la batterie, éventuellement via une résistance de mesure du courant, un condensateur reliant les deux bornes de la batterie entre elles et jouant le rôle de filtre et de réservoir d'énergie.

De préférence, le point commun des transistors de puissance est relié à la borne négative de la batterie via une résistance permettant d'une part la mesure du courant dans ces transistors, et d'autre part de s'assurer que le potentiel du point commun est toujours supérieur au potentiel de la cathode des diodes de récupération reliée à la borne négative de la batterie.

Ainsi, l'alimentation selon l'invention a des performances similaires nettement supérieures, aux alimentations de puissance tout en ayant un prix de revient beaucoup plus faible. En effet, le circuit chargeur/onduleur ne met en oeuvre que deux transistors et deux diodes, et la commande de la modulation de la largeur d'impulsions est grandement simplifié du fait que l'on utilise un montage du type PUSCH-PULL. Cependant, il est clair que l'alimentation selon l'invention n'est applicable que dans des domaines de puissances inférieures ou égales à 1500 VA, car pour des puissances supérieures le volume du transformateur central deviendrait prohibitif, les problèmes de filtrage apparaîtraient, et des transistors de puissance exceptionnels devraient être utilisés.

Un mode particulier de réalisation de l'invention va maintenant être décrit en référence aux figures annexées dans lesquelles :

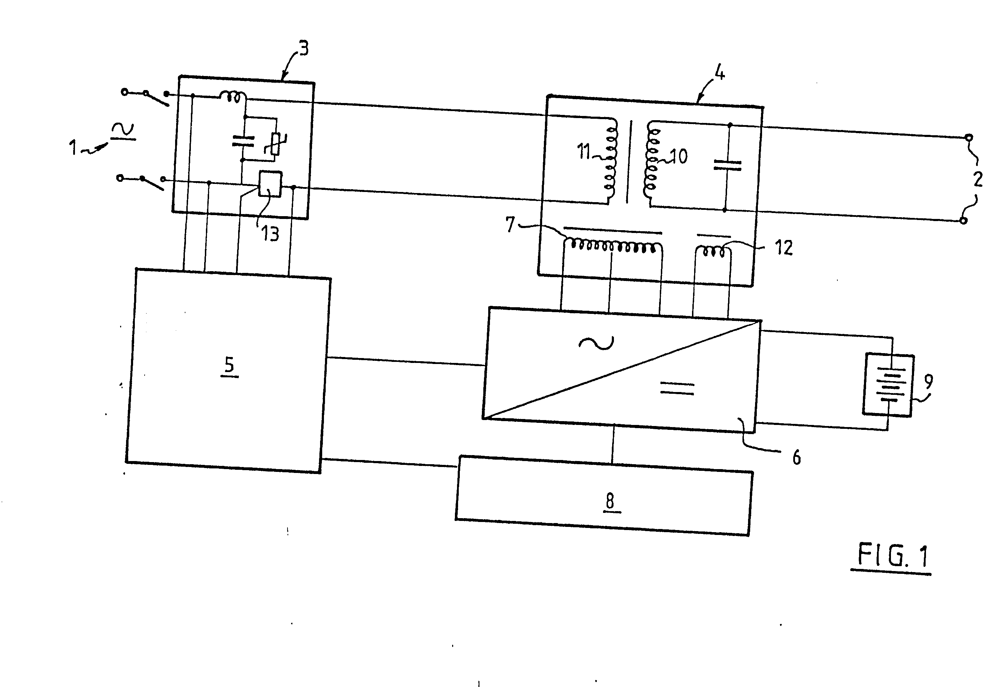

- La figure 1 est un schéma de principe illustrant la disposition générale de divers éléments de l'alimentation selon l'invention.

- La figure 2 est un schéma illustrant la logique et le fonctionnement du dispositif de détection.

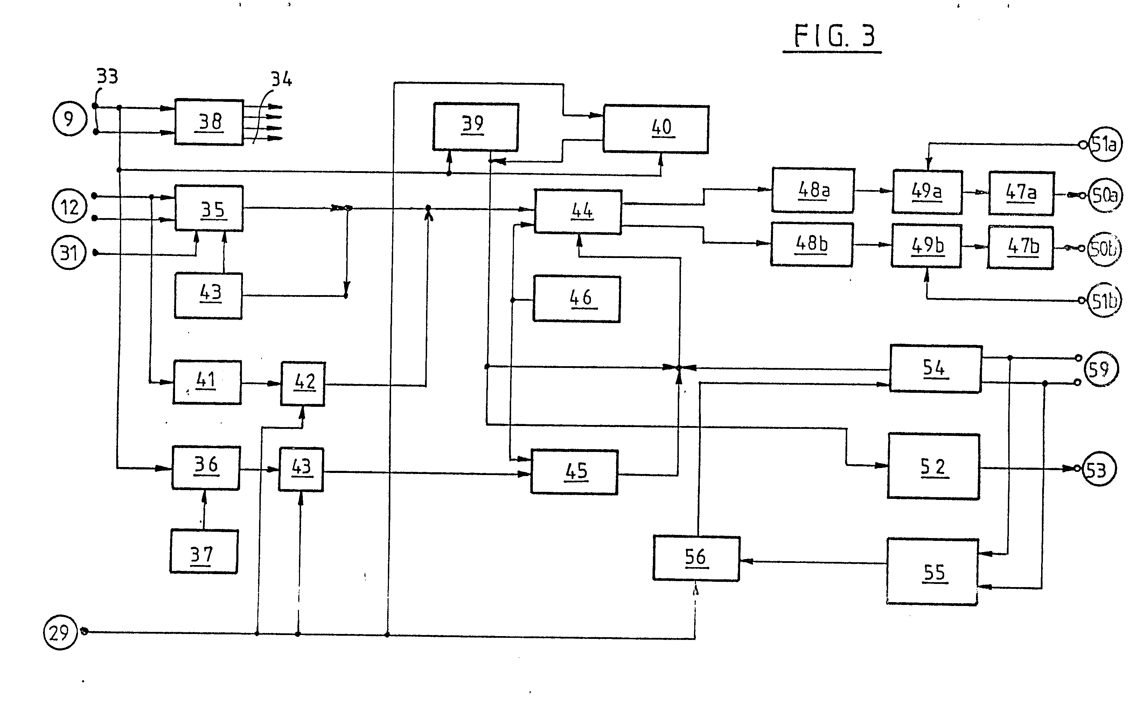

- La figure 3 est un schéma illustrant la logique et le fonctionnement du dispositif de commande du circuit chargeur/onduleur.

- La figure 4 est un schéma de principe du circuit chargeur/onduleur.

Une alimentation en courant alternatif non susceptible d'être interrompue selon l'invention comporte une connexion à une source électrique alternative normale, et une connexion à une charge 2. La source 1 est généralement le réseau électrique national ou secteur, délivrant généralement un courant alternatif de 50 Hz ou 60 Hz sous une tension de 220 V. La charge 2 est quelconque, mais une alimentation selon l'invention est particulièrement adaptée à une charge 2 du type mini ou micro-informatique, dispositif de sécurité, appareils médicaux, télématique, automation..., ou à toute autre installation pour laquelle il est nécessaire d'avoir une source de courant non susceptible d'être interrompue et d'être à l'abri des défaillances du secteur, par exemple susceptibles d'engendrer des pertes d'information.

Le réseau 1 est relié à la charge 2 par un dispositif 3 de commutation et un transformateur 4. A l'état normal, quand le courant délivré par le secteur est correct, la source 1 est électriquement connectée au transformateur 4 par lequel elle alimente la source 2. Par contre, lorsque la source 1 est défaillante, le dispositif 3 de commutation isole le transformateur 4 de la source 1.

L'alimentation comporte également un dispositif de détection 5 des défaillances de la source 1 commandant le dispositif 3 de commutation, un circuit chargeur/onduleur 6 relié à au moins un enroulement primaire 7 du transformateur 4, un dispositif de commande 8 de ce circuit chargeur/onduleur 6, et une source 9 d'énergie électrique de secours, constituée par une batterie d'accumulateurs, par exemple étanche, au plomb, sans entretien.

En fonctionnement, le dispositif détecteur 5 détecte le courant délivré par la source 1. Si ce courant est normal, c'est-à-dire satisfaisant à des normes de tension et/ou phase, et/ou fréquence prédéterminées, le dispositif de détection 5 commande d'une part, le dispositif de commutation 3, de façon qu'il relie électriquement la source 1 et le transformateur 4, et d'autre part, le dispositif de commande 8 qui lui commande le circuit chargeur/onduleur 6 pour un fonctionnement en chargeur de la batterie 9. Dans cet état, dit normal, le circuit chargeur/onduleur 6 transforme le courant en provenance du transformateur 4, via l'enroulement 7, en un courant de charge de la batterie 9. Par contre, lorsque le courant alternatif détecté présente des défaillances, c'est-à-dire est en dehors des tolérances prédéterminées, le dispositif de détection 5 commande le dispositif de commutation 3, de façon à isoler la source 1 du transformateur 4, et le dispositif de commande 8 qui déclenche le fonctionnement en onduleur du circuit chargeur/onduleur 6. Dans ce cas, la charge 2 est alimentée par la batterie 9 dont le courant est ondulé par le circuit 6 et transmis à la charge 2 via le transformateur 4.

Bien entendu, le mode de fonctionnement le plus courant est le mode à l'état normal où la source 1 alimente la charge 2. D'ailleurs, le mode de fonctionnement à l'état de secours ne peut durer indéfiniment sans retour à la normale, puisque la batterie 9 fournissant l'énergie électrique à la charge 2 se décharge. Cette batterie 9 est dimensionnée, en fonction de l'autonomie que l'on désire obtenir.

Dans un mode de réalisation préférentiel où l'alimentation selon l'invention a une puissance crête nominale en régime permanent de l'ordre de 750 VA, la batterie 9 sera avantageusement constituée de quatre éléments de 12 V et 6 Ah en série, ce qui procurera une autonomie de l'ordre de 10 minutes à l'état de secours.

Ainsi, dans une telle alimentation, le circuit onduleur et le circuit chargeur de la batterie 9 sont constitués d'un seul et même circuit chargeur/onduleur 6 fonctionnant en chargeur lorsque l'alimentation est à l'état normal, et en onduleur lorsque l'alimentation est à l'état de secours et que la source 1 électrique alternative normale est défaillante. Le dispositif de commande 8 du circuit chargeur/onduleur 6 est lui-même commandé par le dispositif de détection 5. La fonction du dispositif de commande 8 est de commander le fonctionnement en onduleur, respectivement en chargeur du circuit 6 selon que l'alimentation et le dispositif de commutation 3 sont à l'état de secours, respectivement à l'état normal. Lorsque l'alimentation est à l'état normal, la source 1 est directement connectée à la charge via le dispositif de commutation 3 et le transformateur 4.

Le circuit chargeur/onduleur 6 fournit l'énergie électrique alternative à la charge 2 exclusivement lorsque l'alimentation est en état de secours, la source 1 étant déconnectée.

Le transformateur 4 de puissance comporte un enroulement 10 secondaire connecté électriquement à la charge 2 et au moins deux enroulements primaires 7 et 11, l'un 11 étant connecté à la source 1 électrique alternative normale via le dispositif de commutation 3 et l'autre 7 étant connecté au circuit chargeur/onduleur 6. Le transformateur 4 de puissance comporte avantageusement un troisième enroulement primaire 12 de mesure du courant alternatif, qui passe dans l'enroulement primaire 7.

Le dispositif de commutation 3 est principalement constitué d'un contacteur statique ultra-rapide 13 commandé par le dispositif de détection 5 des défaillances de la source 1. Ce contacteur statique 13 est commandé au démarrage par l'intermédiaire d'un relais de démarrage 20 du dispositif de détection 5. Par la suite, il est commandé par le dispositif de détection 5.

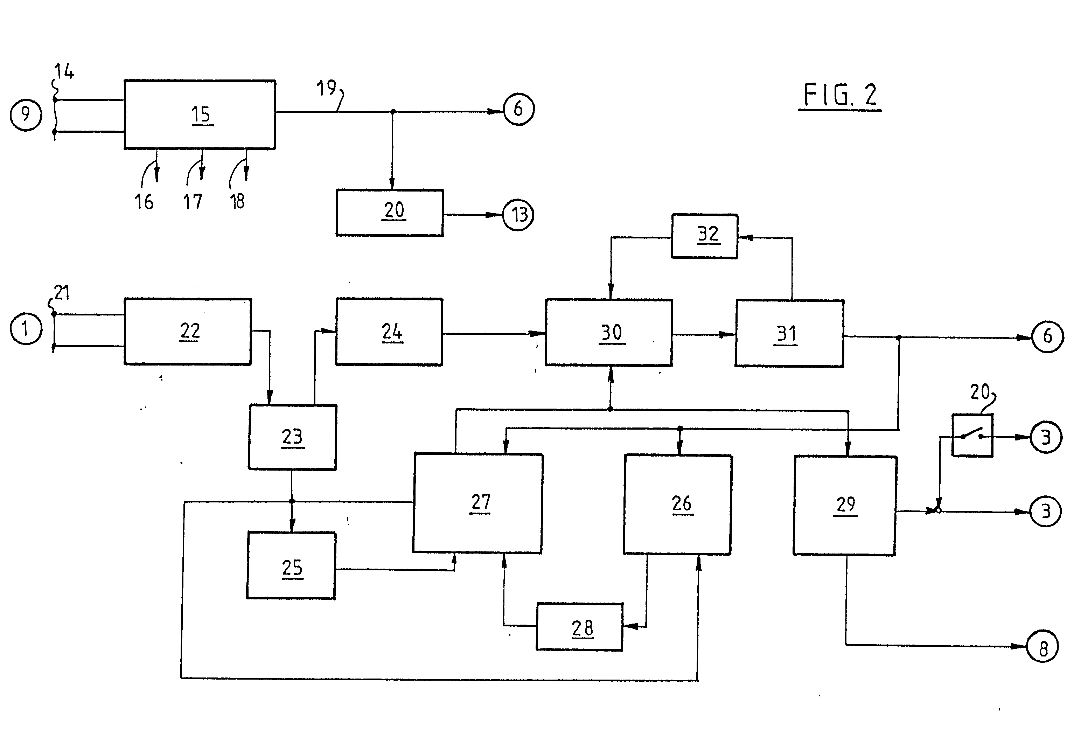

On va maintenant décrire le fonctionnement logique du dispositif de détection illustré par la figure 2.

Les bornes de la batterie 9 sont associées en 14 à une alimentation 15 en courant continu des circuits logiques et analogiques. Cette alimentation comporte une borne 16 à 0V, une borne 17 à 7,5 V, une borne 18 à 15V, pour les circuits logiques et analogiques, et une borne 19 à 48V. Le secteur 1 est connecté en 21 à un dispositif d'isolation du secteur et d'atténuation 22. Ce dispositif 22 fournit le courant du secteur à un circuit 23 qui génère la sinusoïde du secteur, puis à un circuit 24 qui en tire un signal carré. Le circuit 23 est connecté à trois dispositifs de détection 25, 26, 27. Le dispositif 25 est un dispositif de détection de défaillances de la tension du secteur, le dispositif 26 est un dispositif de détection rapide de la présence du secteur 1, qui génère un signal en 28 lorsque ce secteur 1 est correct au dispositif 27 de détection de la phase et/ou de la fréquence du secteur. Après détection en 25 de la tension secteur, le dispositif 25 envoie un signal au dispositif 27 qui détecte la phase et/ou la fréquence, voire également les défaillances de la phase et/ou de la fréquence du secteur 1. Le dispositif 27 est enfin relié à un dispositif 29 de commande de fonctionnement sur secteur ou sur batterie, qui est connecté d'une part au dispositif de commutation 3 via le relais de démarrage 20 et au dispositif de commande 8 du circuit chargeur/onduleur 6 pour ordonner un fonctionnement en chargeur ou en onduleur. Par conséquent, le dispositif de détection 5 déclenche par le circuit 29, la commutation du contacteur statique 13 et le fonctionnement en chargeur ou en onduleur selon que le courant délivré par la source 1 est présent ou non et a ou n'a pas une tension comprise entre des valeurs de référence données, par exemple une tension nominale plus ou moins 15%, et/ou a ou n'a pas sa phase comprise entre des valeurs de référence données, et/ou a ou n'a pas sa fréquence comprise entre des valeurs de référence données.

Le circuit 27 de détection de phase est relié, ainsi que le circuit 24 générant le signal carré du secteur 1 à un circuit 30 de mise en phase et de synchronisation en fréquence, qui est lui-même relié à un circuit 31 de génération de la sinusoïde de référence, qui est de préférence à 50 Hz ou 60 Hz. Un signal retour est envoyé du circuit 31 au circuit 30 via un circuit 32 de génération d'un signal carré de référence à partir de la sinusoïde de référence, afin de générer un signal de référence de phase correcte et synchronisé en fréquence. Ce signal alternatif sert de référence aux circuits 26 et 27 de détection auxquels il est envoyé, et au circuit chargeur/onduleur 6 lorsqu'il fonctionne en onduleur. Le circuit 27 de détection de phase, lorsque tous les tests établis par les circuits de détection 25, 26, 27 assurent un secteur 1 normal, détecte la phase et/ou la fréquence de la sinusoïde de référence en fonction des valeurs détectées, de façon notamment que la commutation se fasse dans des conditions de phase et fréquence correctes.

On va maintenant décrire la logique du dispositif de commande 8.

La batterie 9 est connectée en 33 à un circuit d'alimentation 38 qui comporte quatre bornes : 0V ; 7,5 V ; 15 V; et une référence continue en 34. La tension alternative de sortie mesurée par l'enroulement 12 est envoyée à un amplificateur d'erreur 35. Le signal de référence alternatif précité provenant du circuit 31 est envoyé sur cet amplificateur d'erreur 35.

Le dispositif 8 comporte un autre amplificateur d'erreur 36 sur lequel sont connectées la tension de la batterie prise en 33 et la référence continue 37 prise en 34. La tension de la batterie 9 prise en 33 est aussi envoyée à des dispositifs de détection de surtension 39 et sous tension 40.

Le dispositif comporte également un circuit 41 générateur de signaux carrés dont la tension crête est de l'ordre de 15 V, et un dispositif interrupteur 42 inhibant le circuit 41 lorsque le circuit 29 du dispositif 5 commande un fonctionnement en onduleur. Un circuit d'équilibrage 43 magnétisant supprime toute composante continue à la sortie de l'amplificateur d'erreur 35. L'amplificateur d'erreur 35 est relié à la première partie 44 d'un circuit de modulation de largeur d'impulsions à découpage haute fréquence. L'amplificateur d'erreur 36 est relié à un dispositif interrupteur 43 inhibant cet amplificateur d'erreur 36 dans les mêmes conditions que le dispositif interrupteur 42, lors du fonctionnement en onduleur. L'amplificateur 36 est relié via le dispositif 43 à la deuxième partie 45 du circuit de modulation de largeur d'impulsions à découpage haute fréquence. Un dispositif 46 générateur d'un signal en dents de scie à haute fréquence, notamment de l'ordre de 25 kHz, et dont la tension crête est faible, notamment de l'ordre de 1 V, est connecté aux circuits 44, 45 pour autoriser le découpage à haute fréquence.

Lorsque le circuit 29 impose un fonctionnement en onduleur, l'amplificateur 35 compare la tension alternative de sortie mesurée par l'enroulement 12 et la tension sinusoïdale de référence générée par le circuit 31. Le circuit 41 et l'amplificateur 36 sont inhibés. La fréquence du fondamental à 50 Hz ou 60 Hz est fournie par le circuit 31, la modulation de largeur d'impulsions est obtenue par le circuit 44.

Lorsque le circuit 29 impose un fonctionnement en chargeur, la tension mesurée par l'enroulement 12 correspond au secteur 1. Ce courant sinusoïdal 50 Hz ou 60 Hz est envoyé au circuit 41 qui génère des signaux carrés sous 15 V au circuit 44 qui induit le fonctionnement des commandes 50a, 50b des transistors MOS alternativement pendant une demi-période du 50 Hz. La modulation de largeur d'impulsions à haute fréquence est générée par le circuit 45 à partir de l'amplificateur d'erreur 36 et du circuit 46. En effet, dans ce cas, le signal généré directement du circuit 46 en dents de scie sous 1 V est écrasé par le signal carré sous 15 V du circuit 41.

Le circuit 44 est connecté symétriquement aux circuits 47a, 47b de commande des transistors MOS de puissance, via des circuits 48a, 48b de génération de trous d'interdiction et 49a, 49b d'auto-protection. Les circuits 48a, b, servent à éviter des conductions simultanées lors de la commutation d'une voie à l'autre, en apportant un retard, notamment de l'ordre de 1 µs à la commande 47a ou 47b de la voie mise en conduction. Les circuits 47a et 47b sont connectés aux commandes 50a, 50b des transistors MOS.

Chaque transistor est ainsi commandé pendant 10 ms, demi-période du 50 Hz, à une fréquence de hachage de l'ordre de 25 kHz due aux circuits 44, 45, 46, modulateurs de largeurs d'impulsions. Le signal en sortie 51a, 51b des transistors est envoyé en retour aux circuits d'auto-protection 49a, 49b.

On prévoit également un circuit 52 de commande d'un dispositif interrupteur 53, notamment un relais, branché en série sur la batterie 9 et qui est commandé lors d'un défaut détecté par les circuits 39 ou 40, ou juste après le démarrage de l'alimentation. Un circuit 54 de limitation du courant dans les transistors MOS 58a, 58b engendre un signal de blocage à haute fréquence des commandes 50a, 50b.

Le courant passant dans les transistors MOS 58a, 58b est mesuré par l'intermédiaire d'une résistance 59 et envoyé au circuit 54 de limitation de courant et à un circuit 55 de détection du courant. En fonction de la commande en provenance du circuit 29, et du courant détecté par le circuit 55, un circuit 56 commande le circuit 54 pour une détermination correcte du seuil de courant selon le fonctionnement en onduleur ou en chargeur. En effet, en fonctionnement en chargeur, le courant redressé ne doit pas dépasser un certain seuil de façon à protéger la batterie, et en onduleur le seuil est celui du courant des transistors MOS.

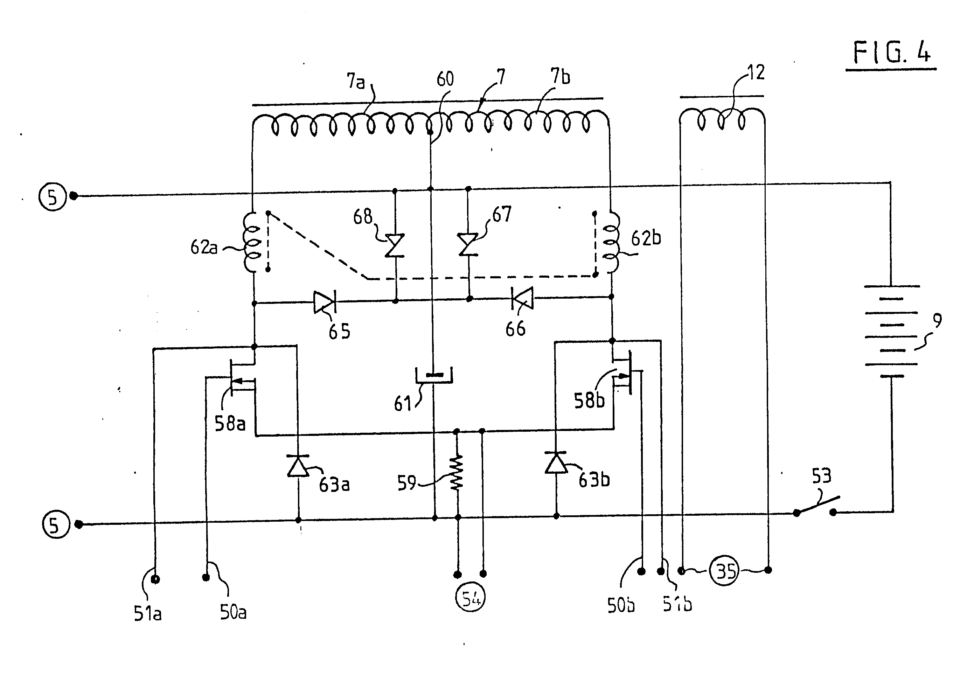

On va maintenant décrire plus précisément le circuit chargeur/onduleur 6 tel qu'illustré par la figure 4.

Ce circuit 6 comporte essentiellement un enroulement 7 primaire du transformateur 4. Le milieu 60 de cet enroulement 7 est connecté au pôle plus de la batterie 9. La tension crête aux bornes de l'enroulement 7 est de l'ordre de 70 V. Un condensateur 61 est connecté d'une part, au milieu 60 de l'enroulement 7 en parallèle avec le pôle plus de la batterie, et d'autre part, au pôle moins de la batterie déterminant la masse. La batterie 9 est connectée au dispositif de détection 5, éventuellement via un ou plusieurs relais appropriés. Les deux transistors MOS 58a, 58b sont connectés à chaque extrémité de l'enroulement 7 primaire via deux inductances 62a, 62b montées en série entre des transistors 58a, 58b et cet enroulement 7 et magnétiquement couplées entre elles comme représenté en figure 4, par les traits pointillés. Deux diodes de récupération 63a, 63b sont reliées d'une part à la masse (pôle moins de la batterie 9), et d'autre part entre les inductances 62a, 62b et les transistors 58a, 58b comme représenté en figure 4.

Le circuit chargeur/onduleur est donc essentiellement constitué d'un circuit hâcheur à découpage haute fréquence, notamment de l'ordre de 25 kHz par modulation de largeur d'impulsions, du type PUSCH-PULL comportant deux transistors de puissance du type MOS identique. En onduleur, le courant sinusoïdal est synthétisé par modulation des durées de conduction d'un transistor par rapport à l'autre. Le signal de modulation est obtenu en comparant la sinusoïde de sortie à une sinusoïde de référence, le signal d'erreur est ensuite transmis à un modulateur de fréquence de l'ordre de 25 kHz qui commande les transistors du hâcheur. La limitation de courant est réalisée en limitant le courant crête dans les transistors MOS, elle se traduit par un écrêtage de la sinusoïde.

Un tel principe de fonctionnement à découpage haute fréquence permet notamment de réduire le volume du filtre passe-bas de sortie pour la composante haute fréquence, constitué de chacune des inductances 62a, 62b, et d'une capacité branchée par exemple entre les deux bornes de l'enroulement secondaire 10. Comme on l'a compris, le circuit est symétrique, c'est-à-dire que les deux transistors MOS, les deux inductances, les deux diodes... ont les mêmes caractéristiques.

Des diodes 65, 66, 67, 68 sont disposées de façon appropriée comme représenté en figure 4 pour écréter les surtensions aux bornes des transistors 58a, 58b.

En chargeur, alternativement, pendant une demi-période de 50 Hz ou de 60 Hz, un transistor est bloqué, l'autre est commandé en hachage à haute fréquence. Pendant la conduction du transistor 58a, l'inductance 62b récupère l'énergie de l'inductance 62a et la renvoie aux bornes de la batterie via le demi-enroulement 7b et la diode 63b. Le fonctionnement est symétrique lors de l'autre demi-période avec l'inductance 62b qui emmagasine l'énergie, récupérée au blocage du transistor 58b par l'inductance 62a qui alimente la batterie via le demi-enroulement 7a et la diode 63a.

Le condensateur 61 joue le rôle de filtre dans les deux cas de fonctionnement, en hâcheur ou onduleur. De plus, lors du démarrage de l'alimentation, le relais 53 étant ouvert, le condensateur 61 se charge à la valeur crête correspondant à un demi-enroulement, soit 35 V environ, via les diodes 63a, 63b. Il joue le rôle de réservoir d'énergie pour les dispositifs analogiques et logiques qui détectent la présence du secteur 1 correct, puis passent en mode normal. A partir de ce moment, le relais 53 est excité et connecte la batterie.

De nombreuses variantes et améliorations de l'invention sont possibles, et l'homme du métier pourra de manière évidente et connue, mettre en ocuvre les composants adéquats permettant le fonctionnement correct d'un tel dispositif. Notamment, on pourra prévoir des varistances d'entrée et de sortie contre les surtensions en entrée (côté secteur 1) et en sortie (côté charge 2).

0200656

REVENDICATIONS

1. Alimentation d'une charge en courant alternatif non susceptible d'ère interrompue, dont la puissance est inférieure ou égale à 1500 VA, notamment de l'ordre de 750 VA, comportant une batterie (9) d'accumulateurs servant de source d'énergie de secours suppléant aux défaillances d'une source (1) électrique alternative normale, un circuit chargeur/onduleur (6) fonctionnant en chargeur lorsque l'alimentation est à l'état normal et en onduleur lorsque l'alimentation est à l'état de secours et que la source (1) électrique alternative normale est défaillante, un transformateur (4) de puissance comportant un enroulement (10) secondaire connecté électriquement à la charge (2) et au moins deux enroulements primaires, l'un (11) étant connecté à la source (1) électrique alternative normale via un dispositif de commutation (3), et l'autre (7) étant connecté au circuit chargeur/onduleur (6), caractérisée en ce que le circuit chargeur/onduleur (6) est constitué d'un circuit hâcheur PUSCH-PULL par modulation de largeur d'impulsions à découpage à haute fréquence, notamment de l'ordre de 25 kHz, réversible, qui comporte deux transistors de puissance (58a, 58b) identiques connectés respectivement à chacune des extrémités de l'enroulement (7) primaire via deux inductancnes (62a, 62b) montées en série entre les transistors (58a, 58b) et cet enroulement (7) ces deux inductances (62a, 62b) étant couplées magnétiquement entre elles, de sorte qu'en fonctionnement du circuit hâcheur en chargeur, l'une (62a, 62b) récupère par induction l'énergie électrique redressée qui passe dans l'autre (62b ou 62a) lorsque le transistor (58b ou 58a) connecté à cet autre inductance est en conduction, la batterie (9) étant alimentée par cette première inductance (62a ou 62b) en courant de charge parfaitement redressé.

2. Alimentation selon la revendication 1, caractérisée en ce que la borne positive de la batterie (9) est connectée au point milieu (60) de l'enroulement (7) primaire du transformateur auquel les inductances (62a, 62b) sont connectées, la borne négative de la batterie (9) étant reliée à deux diodes (63a, 63b) de récupération connectées par ailleurs respectivement au point de jonction des inductances (62a, 62b) et des transistors (58a, 58b) et ces diodes (63a, 63b) étant

# 0200656

passantes entre la borne négative de la batterie (9) et ce point de jonction, les deux transistors (58a, 58b) étant par ailleurs connectés directement en mode PUSCH-PULL entre eux et à la borne négative de la batterie (9), éventuellement via une résistance (59) de mesure du courant, un condensateur (61) reliant les deux bornes de la batterie (9) entre elles et jouant le rôle de filtre et de réservoir d'énergie.

3. Alimentation selon la revendication 2, caractérisée en ce que le point commun des transistors de puissance (58a, 58b) est relié à la borne négative de la batterie (9) via une résistance (59) permettant d'une part la mesure du courant dans ces transistors (58a, 58b), et d'autre part de s'assurer que le potentiel du point commun est toujours supérieur au potentiel de la cathode des diodes de récupération (63a, 63b) reliée à la borne négative de la batterie (9).

FIG.1

FIG. 2

2 / 4

0200656

FIG. 3

0200656

0200656

FIG.4

Office européen
des brevets

**RAPPORT DE RECHERCHE EUROPEENNE**

**0200656**
Numero de la demande

EP 86 40 0964

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| Y,D | WO-A-8 002 478 (EXIDE ELECTRONICS INTERNATIONAL CORP.) * Abrégé; page 5, ligne 11 - page 7, ligne 30; figure 4 * | 1-3 | H 02 J 9/06 H 02 M 7/538 |
| Y | FR-A-2 345 847 (ETABLISSEMENTS PIERRE FONTAINE) * Page 1, lignes 5-30; page 8, lignes 2-4; page 8, ligne 35 - page 9, ligne 2; page 9, ligne 38 - page 10, ligne 3 * | 1,2 | |
| Y,D | WO-A-8 001 443 (WESTERN ELECTRIC) * Abrégé; page 4, lignes 4-11; figure 1 * | 3 | |
| A | FR-A-2 047 029 (SHINKO ELECTRIC CO.) * Page 2, ligne 31 - page 3, ligne 4; figure 1 * | 1 | DOMAINES TECHNIQUES RECHERCHES (Int Cl 4) H 02 J H 02 M |
| A,D | WO-A-8 501 842 (EXIDE ELECTRICS INTERNATIONAL CORP.) | | |
| A,D | FR-A-2 544 924 (ITN ELECTRONIQUE SA) | | |

Le present rapport de recherche a ete etabli pour toutes les revendications

| Lieu de la recherche | Date d achevement de la recherche | Examinateur |
|---|---|---|
| LA HAYE | 08-08-1986 | HELOT H.V. |